# EUROPEAN PATENT APPLICATION

(11) **EP 4 667 203 A1**
(43) Date of publication of application: **24.12.2025**
(21) Application number: 24757187.0
(22) Date of filing: 13.02.2024
(51) Int. Cl.: B29D 30/06

(54) **TREAD MOLD FOR MANUFACTURING TIRE AND TIRE MANUFACTURED BY USING SAME**

(30) Priority: 13.02.2023 KR 20230018516
(71) Applicant: HANKOOK TIRE & TECHNOLOGY CO., LTD, Gyeonggi-do 13494 (KR)
(72) Inventor: BYUN, Seong Woo, Daejeon 34127 (KR); HEO, Woo Haeng, Daejeon 35218 (KR); SONG, Kwan Eui, Daejeon 34111 (KR); CHOI, Jong Won, Daejeon 34111 (KR)
(74) Representative: M. Zardi & Co S.A.
(86) International application number: PCT/KR2024/002032
(87) International publication number: WO 2024/172460

(57) **Abstract**

An embodiment of the present invention provides a tread mold for manufacturing a tire, which is used in a vulcanization process of a molded green tire, comprising a plurality of unit molds which press the outer circumference of the green tire during a vulcanization process, and are arranged in the circumferential direction of the green tire, wherein one of two adjacent unit molds from among the plurality of unit molds is provided with a first partial groove and the other of the two adjacent unit molds is provided with a second partial groove. During the vulcanization process, the first partial groove is connected to the second partial groove to form one protrusion molding groove.

## Description

### Technical Field

The present invention relates to a tread mold, more specifically to a tread mold for manufacturing a tire.

### Background Art

Tires have tread wear indicators (TWIs) formed within grooves to easily indicate they are needed to be replaced. The tread wear indicators have the shapes of protrusions within the bottoms of the grooves, while having a height of about 1.6 mm.

In tire manufacturing, first, a green tire is placed into a mold, and then, the green tire is subjected to a vulcanization process during which heat and pressure are applied thereto, thereby completing the tire manufacturing. If the mold and the green tire are brought into close contact with each other in the vulcanization process, there is a need to allow a flow of rubber to become smooth to achieve the emission of residual air in the mold to the outside. However, TWI grooves machined in the mold interrupt the flow of rubber, and in the state where the air remains inside the mold, therefore, the vulcanization process is performed, thereby causing defects on the outer shape of the tire. To solve such problems, air emission holes are machined on the TWI grooves, through which the initial residual air inside the mold is emitted to the outside, thereby allowing the flow of rubber to become smooth.

However, there is a need to have a tread mold with TWI grooves adapted to make air emitted to the outside and minimize defects of the tire, without any machining for the air emission holes within the existing TWI grooves.

Further, conventional tire segment molds are equally spaced apart from one another, and in the same manner as the tire segment molds, parting lines are formed equally spaced apart from one another on the outer peripheral surface of the tire.

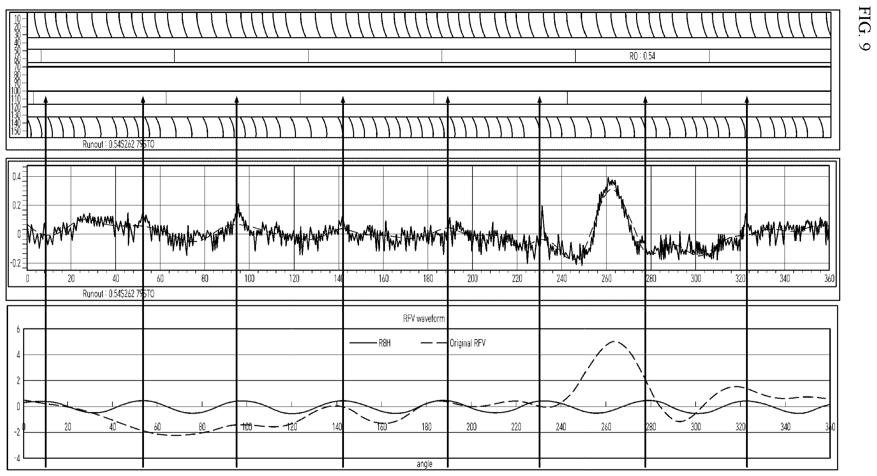

FIG. 9 is a graph showing measurement results for vibrations and noise generated from a general tire.

Referring to FIG. 9, the parting lines, which are equally spaced apart from one another, generate noise and frequencies having given periods during the rotation of the tire, and such frequencies are merged with external frequencies, thereby undesirably causing resonance sounds, while a vehicle is being driven.

### Disclosure

### Technical Problem

It is an object of the present invention to provide a tread mold for manufacturing a tire that is capable of allowing residual air to be emitted during a vulcanization process, without any machining for air emission holes within TWI grooves, so that defects of the tire can be minimized through a smooth flow of rubber.

The technical problems to be achieved through the present invention are not limited as mentioned above, and other technical problems not mentioned herein will be obviously understood by one of ordinary skill in the art through the following description.

### Technical Solution

To accomplish the above-mentioned objects, according to an embodiment of the present invention, there is provided a tread mold for manufacturing a tire, which is used in a vulcanization process of a molded green tire, the tread mold including a plurality of unit molds arranged in a circumferential direction of the green tire to press an outer circumference of the green tire thereagainst in the vulcanization process, wherein one of two adjacent unit molds among the plurality of unit molds may be provided with first partial grooves and the other of the two adjacent unit molds may be provided with second partial grooves, each first partial groove being connected to each second partial grooves to form one protrusion molding groove.

According to the embodiment of the present invention, if the first partial groove may be connected correspondingly to the second partial groove, the bond surface between the first partial groove and the second partial groove may be located closer to the first partial groove or the second partial groove around the center of the protrusion molding groove.

According to the embodiment of the present invention, the first partial groove may consist of a first inclined surface and a first bottom surface, the second partial groove may consist of a second inclined surface and a second bottom surface, and the bond surface may be formed between the first bottom surface and the second bottom surface.

According to the embodiment of the present invention, a distance between the first inclined surface and the bond surface may be less than or equal to 1 mm.

According to the embodiment of the present invention, the bond surface may be spaced apart from the center of the protrusion molding groove by a given length.

According to the embodiment of the present invention, each first partial groove may consist of a first inclined surface and a first bottom surface extending from the first inclined surface, the second partial groove may consist of a second inclined surface brought into close contact with one side of the first bottom surface, and the bond surface may be formed between the first bottom surface and the second inclined surface.

According to the embodiment of the present invention, the protrusion molding groove may be provided plurally so that the plurality of protrusion molding grooves may be located on the line of the bond surface in a transverse direction of the green tire.

According to the embodiment of the present invention, the first bottom surface and the second bottom surface may have the inner peripheral surfaces on the same level.

According to the embodiment of the present invention, the bond surfaces may be formed at irregular periods on the outer peripheral surface of the green tire.

To accomplish the above-mentioned objects, according to another embodiment of the present invention, there is provided a tire manufactured through a tread mold for manufacturing the tire, the tire including parting lines formed on any portions of protrusions.

According to the embodiment of the present invention, the number of parting lines may be n along the outer peripheral surface of the tire, and the protrusions may be arranged on each parting line.

According to the embodiment of the present invention, the parting lines may be formed at points within ±5° of an angle obtained by dividing the circumference of the tire into n.

According to the embodiment of the present invention, each parting line may be located biased by a given length from the centers of the protrusions.

According to the embodiment of the present invention, the number of parting lines may correspond to the number of unit molds of the tread mold, and at least eight or more parting lines may be provided.

According to the embodiment of the present invention, the parting lines may be formed at irregular periods in a circumferential direction of the tread mold.

### Advantageous Effects of Invention

The tread mold for manufacturing the tire according to the embodiments of the present invention is configured to allow the partial grooves formed on the parting line where the adjacent two unit molds are connected to be connected in the vulcanization process to thus form the protrusions (that is, TWIs) on the green tire, so that the residual air in the tread mold is emitted to the outside, without any machining for air emission holes on the protrusion molding grooves (that is, TWI grooves). As a result, the time and cost needed to manufacture the tread mold can be reduced, and air can be more smoothly emitted through the parting lines of the unit molds in the vulcanization process, thereby minimizing defects on the outer shape of the tire.

The effectiveness of the invention is not limited as mentioned above, and it should be understood to those skilled in the art that the effectiveness of the invention may include another effectiveness as not mentioned above from the detailed description of the present invention.

### Brief Description of Drawings

FIG. 1 is a schematic perspective view showing a general tire.
FIG. 2 is a schematic sectional view showing a portion of a vulcanization device.
FIG. 3 is a schematic sectional view showing a tread mold for manufacturing a tire that is viewed in a direction of II-II' of FIG. 2.
FIG. 4 is a schematic perspective view showing a state in which adjacent unit molds are connected according to an embodiment of the present invention.
FIG. 5 is a sectional view showing states before and after the adjacent unit molds are connected according to the embodiment of the present invention.
FIG. 6 is a sectional view showing states before and after adjacent unit molds are connected according to another embodiment of the present invention.
FIG. 7 is a top view showing the connected unit molds of FIG. 4.
FIG. 8 is a partially enlarged perspective view showing a tire manufactured using the tread mold for manufacturing the tire according to the present invention.
FIG. 9 is a graph showing measurement results for vibrations and noise generated from a general tire.

### Mode for Invention

Hereinafter, example embodiments will be described with reference to the accompanying drawings; however, for reference numerals, with respect to the same elements, even though they may be displayed in different drawings, such elements use same reference numerals as much as possible. Also, in explaining the example embodiments, detailed description on known elements or functions will be omitted if it is determined that such description will interfere with understanding of the embodiments.

When it is said that one element is described as being "connected" or "coupled" to the other element, one element may be directly connected or coupled to the other element, but it should be understood that another element may be present between the two elements. In contrast, when it is said that one element is described as being "directly connected" or "directly coupled" to the other element, it should be understood that another element is not present between the two elements.

Terms used in this application are used to only describe specific exemplary embodiments and are not intended to restrict the present invention. An expression referencing a singular value additionally refers to a corresponding expression of the plural number, unless explicitly limited otherwise by the context. In this application, terms, such as "comprise", "include", or 'have", are intended to designate those characteristics, numbers, steps, operations, elements, or parts which are described in the specification, or any combination of them that exist, and it should be understood that they do not preclude the possibility of the existence or possible addition of one or more additional characteristics, numbers, steps, operations, elements, or parts, or combinations thereof.

Now, an embodiment of the present invention will be explained in detail with reference to the attached drawings.

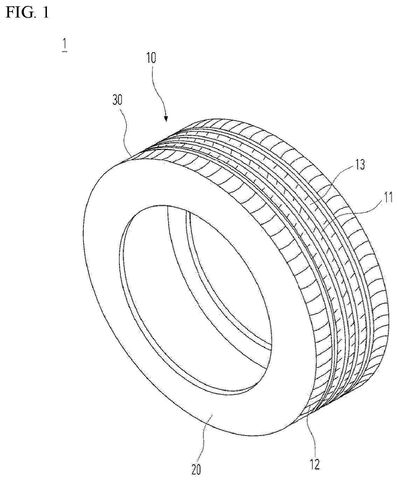

FIG. 1 is a schematic perspective view showing a general tire.

Referring to FIG. 1, a pneumatic tire 1 includes a tire tread 10, a pair of sidewalls 20 located on the ends of both sides of the tire tread 10, and a pair of shoulders 30 located between the tire tread 10 and one side sidewall 20 and between the tire tread 10 and the other side sidewall 20. Further, the pneumatic tire 1 includes beads (not shown) disposed on the undersides of the sidewalls 20, a body ply (not shown) located under the tire tread 11, and a belt layer (not shown) located between the tire tread 10 and the body ply (not shown).

The tire tread 10 is located on the outermost surface of the tire, made of a thick rubber layer for protecting the body ply, and transmits the driving and braking forces of a vehicle to the road surface. In this case, the tire tread 10 has grooves 11 and 12 and a plurality of blocks 13 defined by the grooves 11 and 12 formed thereon to obtain drainage, driving stability, traction, and braking ability. Further, the blocks 13 have sipes formed thereon to absorb water, while the vehicle is being driven on wet roads, and thus break a surface film of water.

The grooves 11 and 12 are divided into main grooves (hereinafter, referred to as first grooves) 11 and second grooves 12. The first grooves 11 are formed along the circumferential direction of the tire tread 10. For example, the first grooves 11 are longitudinal grooves extending in the circumferential direction of the tire tread 10. The main blocks 13 are defined on the tire tread 10 by the first grooves 11. The main blocks 13 occupy a large area of the tire tread 10 and thus transmit the driving and braking forces of the vehicle to the road surface.

The second grooves 12 are formed between the adjacent first grooves 11 to connect the first grooves 11 to each other. For example, the second grooves 12 are transverse grooves for connecting the first grooves 11 along the transverse direction vertical to the circumferential direction of the tire tread 10.

The sidewalls 20 each have one side connected to the side portions of the tire tread 10 and the other side connected to the beads. The sidewalls 20 are side portions of the pneumatic tire 1, protect the body ply, provide the stability in the side portions of the pneumatic tire 1, and perform bending to ensure smooth ride. Further, the sidewalls 20 transmit the torque of an engine received from a drive shaft to the tire tread 10.

Otherwise, the tire tread 10 may have grooves with different shapes from the linear type grooves as mentioned above. For example, a winter tire has "V"-shaped grooves (not shown) formed on the entire surface of the tire tread 10 or has "V"-shaped grooves or grooves (not shown) with various shapes between the above-mentioned main grooves 11.

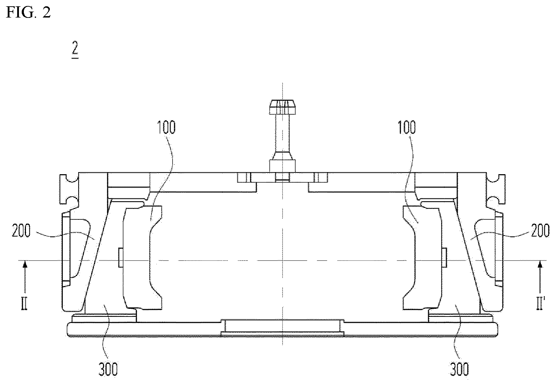

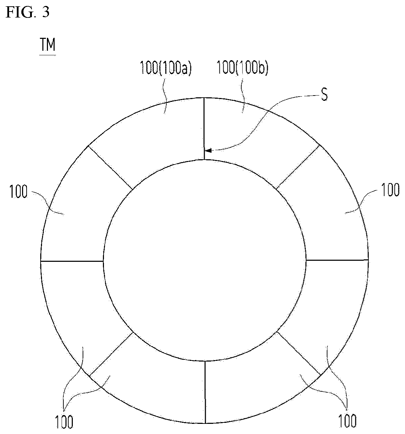

FIG. 2 is a schematic sectional view showing a portion of a vulcanization device. FIG. 3 is a schematic sectional view showing a tread mold for manufacturing a tire that is viewed in a direction of II-II' of FIG. 2.

Referring to FIG. 2, a vulcanization device 2 includes a tire mold for pressing a green tire thereagainst to form a given pattern. In this case, the tire mold has outer rings 200 located on both sides thereof.

The outer rings 200 move upward and downward, and as they move upward and downward, a tread mold TM located inside the outer rings 200 can move left and right. As the tread mold TM moves left and right, a vulcanization process for the molded green tire is performed.

Back segments 300 are supported against the outer rings 200 and thus move left and right by means of the upward and downward movements of the outer rings 200. Further, the tread mold TM is coupled to the inner peripheral surfaces of the back segments 300 and thus surrounds the outer peripheral surface of the green tire.

Referring to FIG. 3, the tread mold TM includes a plurality of molds 100. In this case, the plurality of molds 100 are located to surround the outer peripheral surface of the green tire along the circumferential direction of the molded green tire. In this case, the molds 100 have the same shape, and otherwise, they have similar shapes to each other. The molds 100 may be provided as a single structure. Without being limited thereto, however, the molds 100 may be provided as a plurality of mold pieces (not shown) connected to one another according to another embodiment of the present invention.

Each mold 100 has an arc-shaped inner peripheral surface. Such a plurality of molds 100 are arranged and thus coupled along the circumferential direction of the green tire to provide the circular tread mold TM surrounding the green tire.

In the vulcanization process, the plurality of molds 100 connected in the form of a circle surrounds the outer peripheral surface of the green tire and heats and presses the green tire. In this case, the molds 100 have a plurality of first vent lines (not shown) adapted to emit the air generated during the vulcanization process. The first vent lines are spaced apart from one another along the direction (or circumferential direction) surrounding the outer peripheral surface of the green tire and along the transverse direction of the green tire. Further, the molds 100 have second vent lines (not shown) at the positions corresponding to the first vent lines. Through the second vent lines, the air generated during the vulcanization process is emitted smoothly to the outside.

The tread mold TM has a mold pattern adapted to form a given tread pattern on the outer peripheral surface of the green tire. The mold pattern is formed on the outer surfaces of the molds 100 facing the outer peripheral surface of the green tire. In this case, the outer surfaces of the molds 100, on which the mold pattern is formed, are curved correspondingly to the outer peripheral surface of the green tire.

The mold pattern includes first molding protrusions D1 and second molding protrusions D2. The first molding protrusions D1 are portions for molding the main grooves 11 of the tire tread 10 and formed correspondingly to the main grooves 11 that are going to be formed on the tire tread 10. The first molding protrusions D1 protrude outward from the outer surfaces of the molds 100 in such a way as to extend in the circumferential direction of the green tire. Further, the first molding protrusions D1 are spaced apart from one another at the same distance or different distances from one another along the transverse direction of the green tire.

The second molding protrusions D2 are portions for molding the transverse grooves 12 of the tire tread 10 and formed correspondingly to the transverse grooves 12 that are going to be formed on the tire tread 10. The second molding protrusions D2 protrude outward from the outer surfaces of the molds 100 in such a way as to extend in different directions from the circumferential direction of the green tire. Further, the second molding protrusions D2 are spaced apart from one another on the areas defined by the first molding protrusions D1 to provide groove patterns.

In the case of the tire having "V"-shaped grooves or grooves with various shapes on the tire tread 10, molding protrusions (not shown) with various shapes corresponding to such a tread pattern may be formed on the outer surfaces of the molds 100.

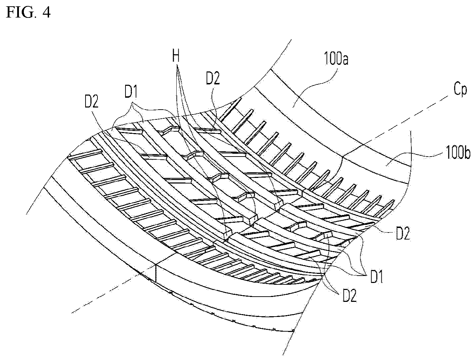

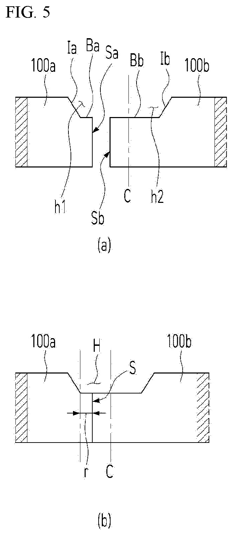

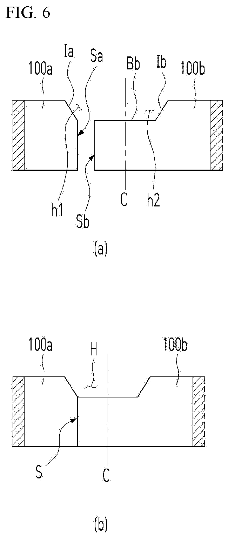

FIG. 4 is a schematic perspective view showing a state in which adjacent unit molds are connected according to an embodiment of the present invention. FIG. 5 is a sectional view showing states before and after the adjacent unit molds are connected according to the embodiment of the present invention. FIG. 6 is a sectional view showing states before and after adjacent unit molds are connected according to another embodiment of the present invention.

Referring to FIGs. 3 to 6, as mentioned above, the tread mold TM for manufacturing the tire includes the plurality of molds 100, and in this case, the plurality of molds 100 are referred to as 'unit molds'. In this case, n unit molds are provided, and one (hereinafter, referred to as the first unit mold) of the adjacent unit molds 100a and 100b among the plurality of unit molds 100 has first partial grooves h1. Further, the other (hereinafter, referred to as the second unit mold) of the adjacent unit molds 100a and 100b has second partial grooves h2.

The first partial grooves h1 are formed on one end (hereinafter, referred to as a first end) Sa of both ends of the first unit mold 100a. In this case, the first end Sa is an end that faces the second unit mold 100b. In detail, the first partial grooves h1 are located on the first molding protrusions D1 formed on the outer surface of the first end Sa of the first unit mold 100a. The first partial grooves h1 are concave inward from the outer surfaces of the first molding protrusions D1.

The second partial grooves h2 are formed on one end (hereinafter, referred to as a second end) Sb of both ends of the second unit mold 100b. In detail, the second partial grooves h2 are located on the first molding protrusions D1 formed on the outer surface of the second end Sb of the second unit mold 100b. The second partial grooves h2 are concave inward from the outer surfaces of the first molding protrusions D1. In this case, the second end Sb is an end that faces the first unit mold 100a. Further, the first molding protrusions D1 where the first partial grooves h1 are formed face the first molding protrusions D1 where the second partial grooves h2 are formed, and in the vulcanization process, they are connected to one another. Therefore, the first partial grooves h1 are arranged to face the second partial grooves h2, so that the first partial grooves h1 and the second partial grooves h2 are connected to each other in the vulcanization process.

In the vulcanization process, the first unit mold 100a and the second unit mold 100b are connected to each other, so that the first partial grooves h1 and the second partial grooves h2 are connected to form protrusion molding grooves H. In this case, a bond surface S between each first partial groove h1 and each second partial groove h2 is located closer to any one of the first partial groove h1 and the second partial groove h2 around a center C of the protrusion molding groove H. In this case, the bond surface S is a portion where the outer surface Sa of the first partial groove h1 and the outer surface Sb of the second partial groove h2 are brought into close contact with each other, which is located on a parting line Cp where the adjacent unit molds 100a and 100b are connected to each other.

Further, the bond surfaces S are formed at irregular periods on the outer peripheral surface of the green tire. In this case, the number of such different bond surfaces S corresponds to the n unit molds 100. An angle between the bond surfaces S of the unit molds 100 is within ±5° of an angle obtained by dividing the circumference of the green tire into n.

This enables the number of unit molds 100 segmented and the angle between the bond surfaces S of the unit molds 100 to be selected by a user, thereby preventing the unit molds 100 from interfering with one another or colliding, while they are performing opening and closing operations in the vulcanization process.

According to the embodiment of the present invention, as shown in FIG. 5, each first partial groove h1 consists of a first inclined surface Ia and a first bottom surface Ba. Further, each second partial groove h2 consists of a second inclined surface Ib and a second bottom surface Bb.

The first inclined surface Ia extends inclined inward from the outer surface of the first unit mold 100a in such a way as to be connected to one side of the first bottom surface Ba. In this case, the other side of the first bottom surface Ba extends in a different direction from the inclined direction of the first inclined surface Ia. For example, the other side of the first bottom surface Ba extends to the first end Sa of the first unit mold 100a in a direction parallel to the outer surface of the first unit mold 100a, while one side thereof is being connected to the first inclined surface Ia. As a result, the first partial groove h1 has the sectional shape of "└" when viewed in a direction parallel to the side of the first unit mold 100a.

The second inclined surface Ib extends inclined inward from the outer surface of the second unit mold 100b in such a way as to be connected to one side of the second bottom surface Bb. In this case, the other side of the second bottom surface Bb extends in a different direction from the inclined direction of the second inclined surface Ib. For example, the other side of the second bottom surface Bb extends to the second end Sb of the second unit mold 100b in a direction parallel to the outer surface of the second unit mold 100b, while one side thereof is being connected to the second inclined surface Ib. As a result, the second partial groove h2 has the sectional shape of a reverse " 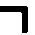 " when viewed in a direction parallel to the side of the second unit mold 100b.

In this case, a width of a surface formed by connecting the first bottom surface Ba and the second bottom surface Bb is less than a distance between a point where the first inclined surface Ia and the first unit mold 100a are brought into close contact with each other and a point where the second inclined surface Ib and the second unit mold 100b are brought into close contact with each other.

The first bottom surface Ba and the second bottom surface Bb have different lengths from each other. For example, the second bottom surface Bb has a length greater than the first bottom surface Ba. In this case, when the first unit mold 100a and the second unit mold 100b are connected to form the protrusion molding groove H in the vulcanization process, the first bottom surface Ba is connected to the second bottom surface Bb. As a result, the bond surface S between the first unit mold 100a and the second unit mold 100b is located between the first bottom surface Ba and the second bottom surface Bb. In this case, since the second bottom surface Bb has a length greater than the first bottom surface Ba, the bond surface S is located closer to the first partial groove h1 than the second partial groove h2 around the center C of the protrusion molding groove H. However, it is possible that the first bottom surface Ba has a length greater than the second bottom surface Bb, so that the bond surface S is located closer to the second partial groove h2 than the first partial groove h1.

Further, the first bottom surface Ba and the second bottom surface Bb have the inner peripheral surfaces on the same level. When the first unit mold 100a and the second unit mold 100b are connected to form the protrusion molding groove H in the vulcanization process, in detail, the first bottom surface Ba and the second bottom surface Bb are formed on the same line, without any step therebetween.

A distance r between the first inclined surface Ia and the bond surface S is adjustable to a predetermined distance. In this case, the distance r means a distance of a straight line from the end of the first inclined surface Ia connected to the first bottom surface Ba to the bond surface S. Further, the predetermined distance is less than or equal to 1 mm.

According to another embodiment of the present invention, as shown in FIG. 6, the first partial groove h1 has the first inclined surface Ia. Further, the second partial groove h2 consists of the second inclined surface Ib and the second bottom surface Bb. In this case, the explanations of the second inclined surface Ib and the second bottom surface Bb have been given above, and therefore, repeated explanations will be avoided.

The first inclined surface Ia extends inclined inward from the outer surface of the first unit mold 100a up to the first end Sa of the first unit mold 100a. As a result, the first partial groove h1 has the sectional shape of " \ " when viewed in a direction parallel to the side of the first unit mold 100a. In this case, a width of the second bottom surface Bb is less than a distance between a point where the first inclined surface Ia and the first unit mold 100a are brought into close contact with each other and a point where the second inclined surface Ib and the second unit mold 100b are brought into close contact with each other.

When the first unit mold 100a and the second unit mold 100b are connected to form the protrusion molding groove H in the vulcanization process, the second bottom surface Bb is connected to the first inclined surface Ia. As a result, the bond surface S between the first unit mold 100a and the second unit mold 100b is located between the first inclined surface Ia and the second bottom surface Bb. In this case, since the first partial groove h1 is formed only with the first inclined surface Ia, the bond surface S is located closer to the first partial groove h1 than the second partial groove h2 around the center C of the protrusion molding groove H. However, it is possible that the first unit mold 100a consists the first inclined surface Ia and the first bottom surface Ba and the second unit mold 100b has only the second inclined surface Ib, so that the bond surface S is located closer to the second partial groove h2 than the first partial groove h1.

The reason why the bond surface S is located closer to a given direction on the protrusion molding groove H is flash occurs on the parting line Cp if the parting line Cp becomes closer to the center C of the protrusion molding groove H, thereby making it hard for the pneumatic tire 1's consumer to recognize protrusions T with the naked eye. In this case, the flash is excess rubber material rising to the form of hair, when air is emitted to the parting line in the vulcanization process.

In the drawings, further, the first inclined surface Ia and the second inclined surface Ib are inclined at the same angle in the opposite direction to each other, but the present invention may not be limited thereto.

A plurality of first partial grooves h1 and a plurality of second partial grooves h2 are provided, while having the same number. In this case, the plurality of first partial grooves h1 are located on the plurality of first molding protrusions D1 of the first unit mold 100a. Further, the plurality of second partial grooves h2 are located on the plurality of second molding protrusions D2 of the second unit mold 100b. The first partial grooves h1 are connected correspondingly to their facing second partial grooves h2 in the vulcanization process to form the plurality of protrusion molding grooves H.

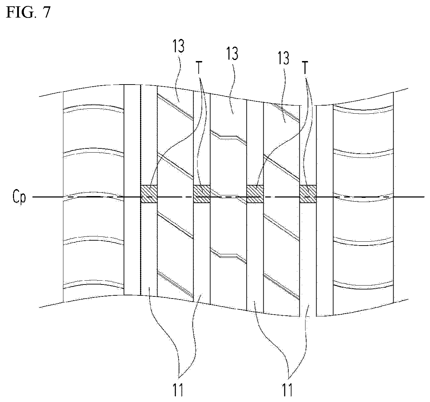

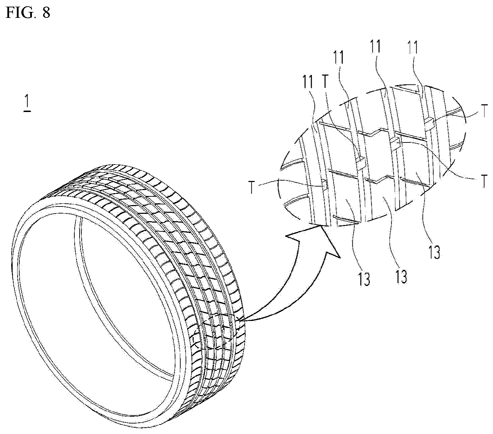

FIG. 7 is a top view showing the connected unit molds of FIG. 4. FIG. 8 is a partially enlarged perspective view showing a tire manufactured using the tread mold for manufacturing the tire according to the present invention.

Referring to FIGs. 7 and 8, as mentioned above, if the plurality of protrusion molding grooves H are formed on the tread mold TM, they are located on the same line along the transverse direction of the green tire. In detail, the plurality of protrusion molding grooves H are located on the same line along the parting line CP of the two adjacent unit molds 100a and 100b.

Further, the plurality of protrusion molding grooves H are spaced apart from one another by different distances from one another along the longitudinal directions of the first molding protrusions D1 (that is, along the circumferential direction of the green tire). In this case, since the plurality of protrusion molding grooves H are located on the parting lines Cp of the adjacent unit molds 100a and 100b connected to each other in the vulcanization process, they have the corresponding number to the number of molds (or unit molds) 100 of the tread mold TM. For example, as shown in FIG. 3, if the tread mold TM has eight unit molds 100, the plurality of protrusion molding grooves H are formed on each parting line Cp where the adjacent unit molds 100 are connected so that eight protrusion molding grooves H are arranged along the circumferential direction of the green tire. Further, at least eight or more unit molds 100 are provided on the tread mold TM.

The protrusion molding grooves H are portions where a plurality of protrusions (See reference symbols "T" of FIG. 7) are formed on the main grooves 11 of the green tire through the pressing process of the tread mold TM in the vulcanization process. In this case, the protrusions T are formed on the main grooves 11 of the tire and serve as tread wear indicators (TWIs) for checking whether the tire is replaced due to wear generated from driving a vehicle.

The tire 1, which is manufactured through the tread mold TM having the plurality of protrusion molding grooves H, has the plurality of protrusions T on the main grooves 11 in such a way as to be located on the same line in the transverse direction of the tire along the parting lines Cp of the molds 100. Further, the protrusions T, which have the corresponding number to the number of the unit molds 100, are formed on each main groove 11 of the tire 1 in the circumferential direction of the tire 1.

Further, the plurality of protrusion molding grooves H are formed at irregular periods n on the outer peripheral surface of the green tire.

The parting lines Cp formed regularly on the green tire generate noise and frequencies having given periods during the rotation of the tire, and since such frequencies are merged with external frequencies, the parting lines Cp produce resonance sounds while the vehicle is being driven. To avoid such problems, the bond surfaces S that are formed at irregular periods serve to reduce the noise generated from the tire.

The tire 1, which is manufactured through the tread mold TM, has the parting lines Cp formed on any one portion of the protrusions, and in this case, the number of parting lines Cp is n that corresponds to the number of tread molds TM. The n parting lines Cp are formed at points within ±5° of an angle obtained by dividing the circumference of the tire into n. The protrusions T are located on the parting lines Cp, that is, on the n lines obtained by dividing the green tire into n. Further, each parting line Cp is located biased by a given length from the centers of the protrusions. In detail, the parting line Cp is spaced apart from the centers of the protrusions by the given length. For example, the parting line Cp is spaced apart from the ends of first partial protrusions toward the centers of the protrusions by a distance less than or equal to 1 mm.

In this case, each parting line Cp is located on the same line as the bond surface S where the adjacent unit molds 100a and 100b are connected to each other.

In this case, the parting line Cp may have the shape of a curve as well as a straight line, and therefore, the bond surface of the tire is located on the parting line Cp.

Further, the parting lines Cp are formed at irregular periods on the outer peripheral surface of the tire 1, and an angle between the different bond surfaces S is within ±5° of an angle obtained by dividing the circumference of the tire into n. In this case, at least eight or more unit molds 100 are provided, but the present invention may not be limited thereto.

As mentioned above, the tread mold TM for manufacturing the tire according to the embodiments of the present invention is configured to allow the partial grooves h1 and h2 formed on the parting line Cp where the adjacent two unit molds 100a and 100b are connected to be connected in the vulcanization process to thus form the protrusions T on the green tire, so that the residual air in the tread mold TM is emitted to the outside, without any machining for air emission holes on the protrusion molding grooves H. As a result, the time and cost needed to manufacture the tread mold TM can be reduced, and air can be more smoothly emitted through the parting lines Cp of the unit molds 100a and 100b in the vulcanization process, thereby minimizing defects on the outer shape of the tire 1.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention. For example, the parts expressed in a singular form may be dispersedly provided, and in the same manner as above, the parts dispersed may be combined with each other.

Therefore, the present invention is not to be restricted by the embodiments as mentioned above. It is therefore intended that the scope of the invention be limited not by this detailed description, but rather by the claims appended hereto.

## Claims

1. A tread mold for manufacturing a tire, which is used in a vulcanization process of a molded green tire, the tread mold comprising a plurality of unit molds arranged in a circumferential direction of the green tire to press an outer circumference of the green tire in the vulcanization process, wherein one of two adjacent unit molds among the plurality of unit molds is provided with first partial grooves and the other of the two adjacent unit molds is provided with second partial grooves, each first partial groove being connected to each second partial groove to form one protrusion molding groove.

2. The tread mold according to claim 1, wherein if the first partial groove is connected correspondingly to the second partial groove, the bond surface between the first partial groove and the second partial groove is located closer to the first partial groove or the second partial groove around the center of the protrusion molding groove.

3. The tread mold according to claim 2, wherein the first partial groove consists of a first inclined surface and a first bottom surface, the second partial groove consists of a second inclined surface and a second bottom surface, and the bond surface is formed between the first bottom surface and the second bottom surface.

4. The tread mold according to claim 3, wherein a distance between the first inclined surface and the bond surface is less than or equal to 1 mm.

5. The tread mold according to claim 2, wherein the bond surface is spaced apart from the center of the protrusion molding groove by a given length.

6. The tread mold according to claim 2, wherein the first partial groove consists of a first inclined surface and a first bottom surface extending from the first inclined surface, the second partial groove consists of a second inclined surface brought into close contact with one side of the first bottom surface, and the bond surface is formed between the first bottom surface and the second inclined surface.

7. The tread mold according to claim 1, wherein the protrusion molding groove is provided plurally so that the plurality of protrusion molding grooves are located on the line of the bond surface in a transverse direction of the green tire.

8. The tread mold according to claim 3, wherein the first bottom surface and the second bottom surface have the inner peripheral surfaces on the same level.

9. The tread mold according to claim 1, wherein the number of unit molds is n so that one or more bond surfaces are formed, and an angle between the different bond surfaces is within ±5° of an angle obtained by dividing the circumference of the green tire into n.

10. The tread mold according to claim 9, wherein the bond surfaces are formed at irregular periods on the outer peripheral surface of the green tire.

11. The tread mold according to claim 10, wherein at least eight or more unit molds are provided.

12. A tire manufactured through a tread mold for manufacturing the tire, the tire comprising parting lines formed on any portions of protrusions, while the number of parting lines is n along the outer peripheral surface thereof, wherein the protrusions are arranged on each parting line.

13. The tire according to claim 12, wherein the parting lines are formed at points within ±5° of an angle obtained by dividing the circumference of the tire into n.

14. The tire according to claim 13, wherein each parting line is located biased by a given length from the centers of the protrusions.

15. The tire according to claim 13, wherein the number of parting lines corresponds to the number of unit molds of the tread mold, and at least eight or more parting lines are provided.

16. The tire according to claim 13, wherein the parting lines are formed at irregular periods in a circumferential direction of the tread mold.
